# DEMANDE DE BREVET EUROPEEN

(11) **EP 1 887 500 A1**
(43) Date de publication de la demande: **13.02.2008**
(21) Numéro de dépôt: 06291308.2
(22) Date de dépôt: 11.08.2006
(51) Int. Cl.: G06Q 10/00

(54) **Procédé de recherche et de composition d'itinéraire**

(71) Demandeur: INSTITUT NATIONAL DE RECHERCHE SUR LES TRANSPORTS ET LEUR SECURITE (INRETS), 94110 Arcueil (FR)
(72) Inventeur: Kamoun, Mohamed Amine, 59370 Mons en Baroeul (FR); Uster, Guillaume, 59700 Marcq en Baroeul (FR); Hammadi, Slim, 59651 Villeneuve d'Ascq Cedex (FR)
(74) Mandataire: Cournarie, Michèle

(57) **Abrégé**

Procédé de recherche et de composition d'itinéraire, caractérisé en ce qu'il comporte les étapes consistant à :
a) recevoir d'un utilisateur une requête de recherche et de composition d'itinéraire,
b) déterminer un ensemble de réseaux de transport aptes à être utilisés par l'utilisateur,
c) construire un graphe virtuel partiel comprenant un ensemble de sommets,
d) pour chaque sommet d'un sous-ensemble dudit ensemble de sommets, interroger au moins un agent d'information associé à un réseau de transport auquel appartient ledit sommet pour déterminer et mémoriser une meilleure offre locale pour un trajet local reliant ledit sommet et un autre sommet appartenant audit réseau de transport,
e) composer un itinéraire à partir desdites meilleures offres locales déterminées à l'étape d).

## Description

La présente invention a pour objet un procédé de recherche et de composition d'itinéraire.

Dans le cadre de la mobilité durable, il convient de promouvoir l'utilisation rationnelle et pertinente du meilleur mode de transport pour effectuer un déplacement donné, notamment pour favoriser l'utilisation des transports collectifs par rapport aux véhicules personnels.

Cependant, dans bien des cas, l'information permettant à un usager de choisir un itinéraire, c'est-à-dire un ou plusieurs modes de transport, est éparpillée et/ou difficilement accessible.

En général, un réseau de transport est géré par un opérateur de transport comportant un système d'information d'aide au déplacement (SIAD) qui lui est propre, le système d'information d'aide au déplacement comprenant un extracteur d'information, dit agent d'information (AI). L'agent d'information est capable de donner la meilleure offre dont il dispose pour répondre à une requête d'un utilisateur du type « aller d'une station A du réseau de transport à une station B du réseau de transport avec une contrainte temporelle telle qu'un horaire de départ au plus tôt ou un horaire d'arrivée au plus tard ». Pour cela, l'agent d'information comporte une base de données dans laquelle sont mémorisées des données relatives au réseau de transport, notamment les stations et les trajets existants entre les stations. La base de données est gérée par l'opérateur de transport et n'est pas accessible aux tiers.

En outre, le réseau de transport d'un opérateur de transport dépend du temps, c'est-à-dire que plusieurs horaires de départ peuvent être associés à une station, la durée du trajet entre deux stations pouvant varier en fonction de l'horaire de départ.

De plus, les réseaux de transport sont généralement non FIFO (First In First Out), c'est-à-dire qu'il peut exister deux trajets d'une station de départ vers une station d'arrivée tels que le premier trajet partant de la station de départ arrive en deuxième à la station d'arrivée.

Le document WO-01/29693 décrit un procédé de recherche d'un itinéraire au plus bas prix sur un réseau informatique. Une étape du procédé consiste à construire un graphe virtuel associé à un point de départ et à un point d'arrivée donnés. Le graphe virtuel comprend des noeuds de départ et d'arrivée déterminés par une requête d'un utilisateur, des noeuds intermédiaires déterminés à partir d'une base de données et des arcs reliant les noeuds, chaque arc correspondant au coût d'un trajet entre deux noeuds. Il peut y avoir plusieurs arcs entre deux noeuds lorsque plusieurs trajets de coûts différents permettent de relier les deux noeuds.

Ce procédé a pour inconvénients de nécessiter le téléchargement et la mémorisation d'une quantité importante de données, notamment lorsque le nombre de trajets existants est élevé.

La présente invention a pour but de proposer un procédé de recherche et de composition d'itinéraire qui évite au moins certains des inconvénients précités, qui permette de minimiser le temps du voyage entre une station de départ et une station d'arrivée, sans nécessiter le téléchargement et la mémorisation d'une quantité importante de données.

A cet effet, l'invention a pour objet un procédé de recherche et de composition d'itinéraire, caractérisé en ce qu'il comporte les étapes consistant à :
a) recevoir d'un utilisateur une requête de recherche et de composition d'itinéraire comportant un point de départ, un point d'arrivée et une contrainte temporelle,
b) déterminer un ensemble de réseaux de transport aptes à être utilisés par l'utilisateur pour aller dudit point de départ audit point d'arrivée,
c) construire un graphe virtuel partiel comprenant un ensemble de sommets, associés, respectivement, audit point de départ, audit point d'arrivée et à chaque station d'intersection entre au moins deux desdits réseaux de transport déterminés à l'étape b),
d) pour chaque sommet d'un sous-ensemble dudit ensemble de sommets, interroger au moins un agent d'information associé à un réseau de transport auquel appartient ledit sommet pour déterminer et mémoriser une meilleure offre locale pour un trajet local reliant ledit sommet et un autre sommet appartenant audit réseau de transport,
e) composer un itinéraire à partir desdites meilleures offres locales déterminées à l'étape d).
   De préférence, l'étape d) comprend les sous-étapes consistant à :
f) sélectionner un sommet,
g) pour chaque couple sommet-réseau comprenant un réseau de transport auquel ledit sommet sélectionné à l'étape f) appartient et un autre sommet appartenant audit réseau de transport, interroger un agent d'information associé audit réseau de transport pour déterminer une meilleure offre locale.

Avantageusement, l'étape d) comprend les sous-étapes consistant à, lorsqu'une meilleure offre locale a été déterminée pour un sommet, tester une condition d'existence de meilleure offre locale déjà mémorisée pour ledit sommet, et, lorsque la condition est vérifiée, comparer la meilleure offre locale déterminée et la meilleure offre locale mémorisée, et conserver celle qui répond le mieux à ladite contrainte temporelle.

Selon un mode de réalisation de l'invention, ladite contrainte temporelle est un horaire de départ au plus tôt, une meilleure offre locale associée à un sommet minimisant l'heure d'arrivée audit sommet.

Selon un autre mode de réalisation de l'invention, ladite contrainte temporelle est un horaire d'arrivée au plus tard, une meilleure offre locale associée à un sommet maximisant l'horaire de départ dudit sommet.

L'invention a également pour objet un module programmé pour mettre en oeuvre les étapes du procédé.

De préférence, ledit module est apte à communiquer avec des moyens de stockage de données dans lesquels sont mémorisés une liste de réseaux de transport, un ensemble de stations d'intersection et des adresses réseau d'agents d'information associés auxdits réseaux de transport.

Selon un mode de réalisation de l'invention le module est intégré dans un serveur disposé dans un lieu accessible au public, par exemple une gare, un arrêt de bus ou un aéroport.

Selon un autre mode de réalisation de l'invention, le module est intégré dans un dispositif utilisateur.

L'invention a également pour objet un programme d'ordinateur comportant des codes d'instructions aptes à être lus ou écrits sur un support et aptes à être exécutés par une machine numérique pour mettre en oeuvre les étapes du procédé.

L'invention a également pour objet un support d'enregistrement destiné à la mise en oeuvre du procédé.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique fonctionnelle d'un système de recherche et de composition d'itinéraire selon un mode de réalisation de l'invention ;
- la figure 2 est une vue schématique simplifiée représentant un ensemble de réseaux de transport et leurs stations d'intersection ;
- la figure 3 est un schéma fonctionnel représentant les étapes d'un procédé de recherche et de composition d'itinéraire exécuté par le dispositif de recherche et de composition d'itinéraire de la figure 1 ; et
- la figure 4 est une vue schématique fonctionnelle d'une variante de réalisation du système de recherche et de composition d'itinéraire.

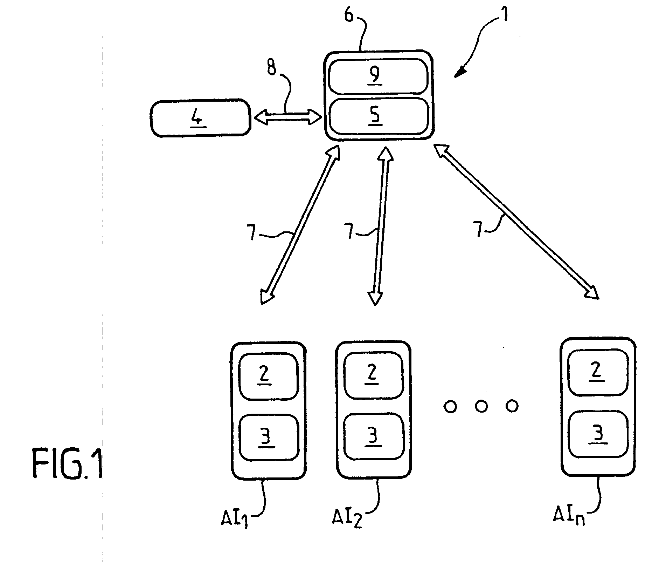

En se référant à la figure 1, on voit un système de recherche et de composition d'itinéraire 1 et un ensemble d'agents d'information AI₁ à AIₙ, chaque agent d'information AI₁ à AIₙ appartenant à un système d'information d'aide au déplacement d'un opérateur de transport. Chaque opérateur de transport gère un réseau de transport R₁ à Rₙ, qui peut être un réseau de bus, un réseau ferroviaire, etc. On appelle station S d'un réseau de transport R un noeud du réseau de transport, qui peut être, par exemple, un arrêt de bus, une station de métro, une gare, etc.

Un agent d'information AI₁ à AIₙ comprend des moyens de calcul 2 d'un itinéraire local et une base de données 3. Le terme « local » désigne ici un itinéraire inclus dans le réseau de transport R associé à l'agent d'information AI.

Le système 1 comporte des moyens de stockage de données 4, dits annuaire, dans lesquels sont mémorisées des informations relatives aux réseaux de transport R₁ à Rₙ, telles que la liste des réseaux de transport adjacents à un réseau de transport, les stations d'intersection S entre les différents réseaux de transport R₁ à Rₙ et les adresses HTTP des agents d'information AI₁ à AIₙ associés aux réseaux de transport R₁ à Rₙ. De manière générale, les adresses sont des adresses réseau, c'est-à-dire que chaque agent d'information AI peut être accessible soit via Internet, soit via un réseau informatique quelconque.

Le système 1 comporte un module 5 de recherche et de composition d'itinéraire apte à construire un itinéraire global en fonction d'informations fournies par les différents agents d'information AI₁ à AIₙ. Le système 1 a pour fonction d'éviter à un utilisateur d'avoir à consulter plusieurs sites Internet d'opérateurs de transport pour planifier un voyage.

Le module 5 est par exemple implémenté dans un serveur central 6 disposé dans un lieu accessible au public, par exemple une gare, un arrêt de bus, un aéroport, etc.

Le serveur 6 comporte une interface de communication Internet, pour communiquer avec les différents agents d'information AI₁ à AIₙ, tel que cela est symbolisé sur la figure 1 par des flèches 7. Le serveur 6 comporte une interface pour communiquer avec l'annuaire 4, tel que cela est symbolisé par une flèche 8. La liaison entre le serveur 6 et l'annuaire 4 peut être une liaison série, Ethernet, radio, etc.

Le serveur 6 comporte une interface homme-machine 9, comportant par exemple un clavier et un écran, pour recevoir une requête d'un utilisateur et pour afficher l'itinéraire composé par le module 5.

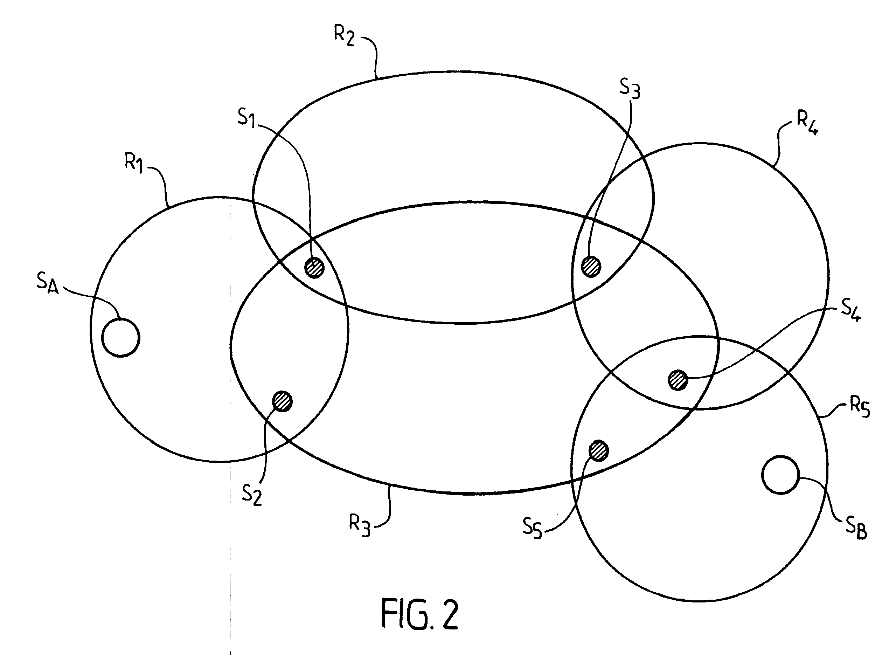

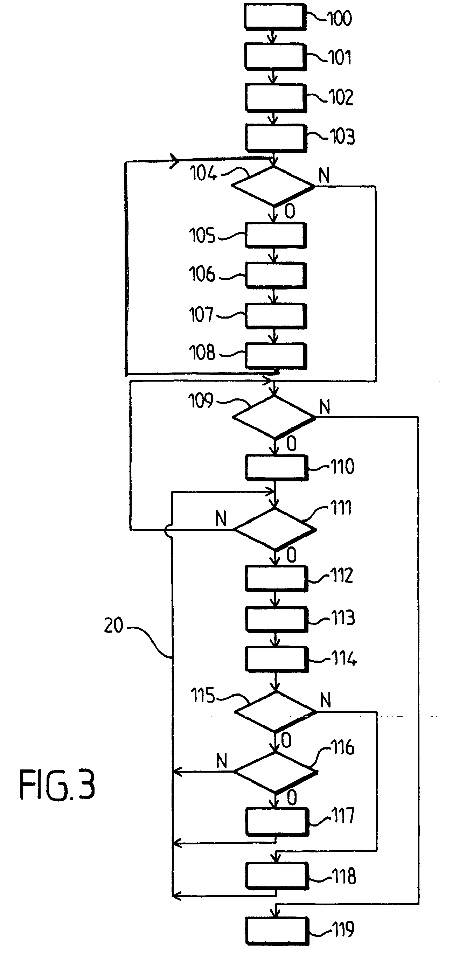

En se référant aux figures 2 et 3, on va maintenant décrire un premier exemple d'exécution d'un procédé de recherche et de composition d'itinéraire exécuté par le module 5 en réponse à une requête d'un utilisateur, lorsque la requête comprend une contrainte temporelle qui est un horaire t₀ de départ au plus tôt.

A l'étape 100, le module 5 reçoit une requête de recherche et de composition d'itinéraire provenant d'un utilisateur, par le biais de l'interface 9. La requête comprend un point de départ, qui peut être, par exemple, une station ou une adresse, telle que l'adresse de l'utilisateur ou un nom de rue. La requête comprend un point d'arrivée, qui peut être, de manière similaire, une station ou une adresse. La requête comprend une contrainte temporelle, qui, dans l'exemple, est un horaire t₀ de départ au plus tôt, c'est-à-dire un horaire à partir duquel l'utilisateur peut partir du point de départ.

A l'étape 101, le module 5 détermine, en utilisant l'annuaire 4, un ensemble de réseaux de transport R aptes à être utilisés par l'utilisateur pour se rendre du point de départ au point d'arrivée. L'ensemble de réseaux de transport comprend un réseau de transport R₁ associé au point de départ, c'est-à-dire un réseau de transport R₁ comprenant le point de départ lorsque celui-ci est une station et un réseau de transport R₁ comprenant une station proche du point de départ lorsque celui-ci est une adresse. L'ensemble de réseaux de transport comprend de manière similaire au moins un réseau de transport R₅ associé au point d'arrivée, c'est-à-dire un réseau de transport R₅ comprenant le point d'arrivée lorsque celui-ci est une station et un réseau de transport R₅ comprenant une station proche du point d'arrivée lorsque celui-ci est une adresse. L'ensemble de réseaux de transport peut comprendre également un ou plusieurs réseaux de transport intermédiaires situés entre les réseaux de transport R₁ et R₅. Dans l'exemple représenté sur la figure 3, l'ensemble de réseaux de transport comprend trois réseaux de transport intermédiaires R2, R3 et R4.

A l'étape 102, le module 5 construit un graphe virtuel partiel comprenant un ensemble de sommets comportant un sommet de départ SA correspondant à la station de départ, un sommet d'arrivée S_{B} correspondant à la station d'arrivée, et des sommets d'intersection S₁, S₂, S₃, S₄ et S₅ correspondant respectivement aux stations d'intersection entre au moins deux des réseaux de transport déterminés à l'étape 101, ici les réseaux R₁ à R₅.

A l'étape 103, le module 5 sélectionne parmi l'ensemble de sommets un sommet initial pour effectuer la recherche d'itinéraire. Dans l'exemple, le sommet de départ S_{A} est sélectionné.

A l'étape 104, le module 5 teste une condition d'existence de couple sommet S-réseau R à tester, qui est vérifiée lorsqu'un réseau de transport R comprenant le sommet initial, ici le sommet S_{A}, comprend un autre sommet S, le couple sommet S-réseau R n'ayant pas encore été sélectionné à l'étape 105. Ici, la condition est vérifiée puisque les sommets SA, S₁ et S₂ appartiennent au réseau R₁ et que les couples sommet S₁-réseau R₁ et sommet S₂-réseau R₁ n'ont pas encore été sélectionnés à l'étape 105. Lorsque la condition est vérifiée, le procédé passe à l'étape 105.

A l'étape 105, le module sélectionne un couple sommet S-réseau R vérifiant la condition de l'étape 104, par exemple le couple sommet S₁-réseau R₁.

A l'étape 106, le module 5 émet une requête de demande de meilleure offre locale à destination de l'agent AI associé au réseau de transport R sélectionné, ici l'agent AI₁. La requête comprend un sommet de provenance, ici le sommet SA, un sommet de destination, ici le sommet S₁, et un horaire de départ au plus tôt, ici l'horaire t₀. En d'autres termes, du point de vue d'un agent d'information AI, le système 1 est un client parmi d'autres usagers.

A l'étape 107, le module 5 reçoit une réponse de l'agent AI₁ lui indiquant la meilleure offre locale, c'est-à-dire l'offre permettant à l'utilisateur d'arriver au plus tôt au sommet de destination, ici le sommet S₁, par le biais du réseau sélectionné, ici le réseau R₁, compte tenu de l'horaire de départ, ici l'horaire t₀.

A l'étape 108, le module 5 mémorise l'offre locale reçue à l'étape 107 comme meilleure offre locale associée au sommet sélectionné à l'étape 105, ici le sommet S₁. En d'autres termes, le module mémorise un ensemble de données D_{S1}, associées au sommet S₁, comprenant l'horaire t_{1,SA} d'arrivée au sommet S₁, le sommet de provenance, ici le sommet SA, et le réseau de transport utilisé, ici le réseau R₁. Le module 5 mémorise également le sommet de provenance, ici le sommet SA, comme antécédent du sommet sélectionné à l'étape 105, ici le sommet S₁. Le procédé retourne à l'étape 104. Le module 5 mémorise le sommet S₁ comme sommet nouvellement marqué, c'est-à-dire comme sommet pour lequel des données D_{S1} viennent d'être mémorisées.

A l'étape 104, le module 5 teste la condition d'existence de couple à tester. Ici, la condition est vérifiée puisque le couple sommet S₂-réseau R₁ n'a pas encore été sélectionné à l'étape 105.

A l'étape 105, le module 5 sélectionne le couple sommet S₂-réseau R₁.

A l'étape 106, le module 5 émet une requête de meilleure offre locale à destination de l'agent AI₁. La requête comprend un sommet de provenance, ici le sommet SA, un sommet de destination, ici le sommet S₂, et un horaire de départ au plus tôt, ici l'horaire t₀.

A l'étape 107, le module 5 reçoit une réponse de l'agent AI₁ lui indiquant la meilleure offre locale, c'est-à-dire l'offre permettant à l'utilisateur d'arriver au plus tôt au sommet S₂, compte tenu de l'horaire t₀.

A l'étape 108, le module 5 mémorise l'offre locale reçue à l'étape 107 comme meilleure offre locale associée au sommet S₂. En d'autres termes, le module 5 mémorise un ensemble de données D_{S2}, associées au sommet S₂, comprenant l'horaire t_{2,SA} d'arrivée au sommet S₂, le sommet de provenance SA, et le réseau de transport R₁. Le module 5 mémorise également le sommet SA comme antécédent du sommet S₂. Le procédé retourne à l'étape 104. Le module 5 mémorise le sommet S₂ comme sommet nouvellement marqué.

A l'étape 104, le module 5 teste la condition d'existence de couple à tester. Ici, la condition n'est pas vérifiée puisque le sommet SA n'appartient qu'au réseau R₁ et que les deux autres sommets S₁ et S₂ du réseau R₁ ont déjà été sélectionnés à l'étape 105. Lorsque la condition n'est pas vérifiée, le procédé passe à l'étape 109.

A l'étape 109, le module 5 teste une condition de sommet d'intersection à sélectionner, qui est vérifiée lorsqu'un sommet S appartient à la liste des sommets nouvellement marqués. Ici, la condition est vérifiée par les sommets d'intersection S₁ et S₂. Lorsque la condition est vérifiée, le procédé passe à l'étape 110.

A l'étape 110, le module 5 sélectionne un sommet d'intersection S vérifiant la condition de l'étape 109. Le sommet S sélectionné est celui qui parmi la liste des sommets nouvellement marqués présente l'heure d'arrivée minimale, par exemple le sommet S₁. Le sommet S sélectionné, ici le sommet S₁, est retiré de la liste des sommets nouvellement marqués.

A l'étape 111, le module 5 teste une condition d'existence de couple sommet S-réseau R à tester, qui est vérifiée lorsqu'un réseau de transport R comprenant le sommet d'intersection S₁ sélectionné comprend un autre sommet S, le couple sommet S-réseau R n'ayant pas encore été sélectionné à l'étape 112, et le sommet S n'étant pas un antécédent du sommet d'intersection S₁ sélectionné à l'étape 110. Lorsque la condition est vérifiée, le procédé passe à l'étape 112, sinon le procédé retourne à l'étape 109. Ici, la condition est vérifiée par les couples sommet S₂-réseau R₁, sommet S₂-réseau R₃, sommet S₃-réseau R₂, sommet S₃-réseau R₃, sommet S₄-réseau R₃ et sommet S₅-réseau R₃.

A l'étape 112, le module 5 sélectionne un couple sommet S-réseau R vérifiant la condition de l'étape 111, par exemple le couple sommet S₂-réseau R₃.

A l'étape 113, le module 5 émet une requête de demande de meilleure offre locale à destination de l'agent AI du réseau de transport R₃ sélectionné, ici l'agent AI₃. La requête comprend un sommet de provenance, ici le sommet S₁, un sommet de destination, ici le sommet S₂, et un horaire de départ au plus tôt, ici l'horaire t_{1,SA}.

A l'étape 114, le module 5 reçoit une réponse de l'agent AI₃ lui indiquant la meilleure offre locale, c'est-à-dire l'offre permettant à l'utilisateur d'arriver au plus tôt au sommet de destination, ici le sommet S₂, par le biais du réseau de transport sélectionné, ici le réseau R₃, compte tenu de l'horaire de départ au plus tôt, ici l'horaire t_{1,SA}.

A l'étape 115, le module 5 teste une condition de données déjà mémorisées pour le sommet sélectionné à l'étape 112, ici le sommet S₂. Ici, des données D_{S2} ont été mémorisée pour le sommet S₂ lors d'un passage à l'étape 108, donc la condition est vérifiée. Lorsque la condition est vérifiée, le procédé passe à l'étape 116, sinon le procédé passe à l'étape 118.

A l'étape 116, le module 5 teste une condition d'horaire plus avantageux, qui est vérifiée lorsque l'horaire d'arrivée mémorisé, ici l'horaire t_{2,SA}, est supérieur à l'horaire d'arrivée reçu, ici t_{2,S1}. Lorsque la condition est vérifiée, le procédé passe à l'étape 117, sinon le procédé retourne à l'étape 111. Ici, on considère par exemple que t_{2,S1}<t_{2,SA}, et le procédé passe donc à l'étape 117.

A l'étape 117, les données D du sommet sélectionné sont mises à jour, c'est-à-dire que l'horaire d'arrivée mémorisé est remplacé par l'horaire d'arrivée reçu à l'étape 114, le sommet de provenance mémorisé est remplacé par le sommet de provenance reçu à l'étape 114 et le réseau de transport mémorisé est remplacé par le réseau de transport associé à l'agent interrogé à l'étape 113. Ici, les données D_{S2} sont mises à jour en remplaçant l'horaire t₂,_{SA} par l'horaire t_{2,S1}, le sommet SA par le sommet S₁, et le réseau de transport R₁ par le transport R₃.

Le module 5 mémorise également le sommet de provenance, ici le sommet S₁, comme antécédent du sommet sélectionné à l'étape 112, ici le sommet S₂. On notera que le sommet S_{A} est toujours mémorisé comme antécédent du sommet S₂. Le procédé retourne à l'étape 111.

Lorsque le sommet sélectionné n'appartient pas à la liste des sommets nouvellement marqués, le module 5 mémorise le sommet sélectionné comme sommet nouvellement marqué. Ici, le sommet S2 appartient déjà à la liste des sommets nouvellement marqués.

A l'étape 111, le module 5 teste la condition d'existence de couple sommet S-réseau R à tester. Ici, la condition est vérifiée.

A l'étape 112, le module 5 sélectionne un couple sommet S-réseau R vérifiant la condition de l'étape 111, par exemple le couple sommet S₃-réseau R₃.

A l'étape 113, le module 5 émet une requête de demande de meilleure offre locale à destination de l'agent AI du réseau de transport R₃ sélectionné, ici l'agent AI₃. La requête comprend un sommet de provenance, ici le sommet S₁, un sommet de destination, ici le sommet S₃, et un horaire de départ au plus tôt, ici l'horaire t_{1,SA}.

A l'étape 114, le module 5 reçoit une réponse de l'agent AI₃ lui indiquant la meilleure offre locale, c'est-à-dire l'offre permettant à l'utilisateur d'arriver au plus tôt au sommet de destination, ici le sommet S₃, par le biais du réseau de transport sélectionné, ici le réseau R₃, compte tenu de l'horaire de départ au plus tôt, ici l'horaire t_{1,SA}.

A l'étape 115, le module 5 teste la condition de données D déjà mémorisées pour le sommet sélectionné à l'étape 112, ici le sommet S₃. Ici, la condition n'est pas vérifiée. Lorsque la condition n'est pas vérifiée, le procédé passe à l'étape 118.

A l'étape 118, le module 5 mémorise l'offre locale reçue à l'étape 114 comme meilleure offre locale associée au sommet S₃. En d'autres termes, le module 5 mémorise des données D_{S3}, associées au sommet S₃, comprenant l'horaire t_{3,S1} d'arrivée au sommet S₃, le sommet de provenance S₁, et le réseau de transport R₃. Le module 5 mémorise également le sommet S₁ comme antécédent du sommet S₃. Le procédé retourne à l'étape 111. Le module 5 mémorise le sommet sélectionné, ici le sommet S₃, comme sommet nouvellement marqué.

La boucle 20 est ainsi réalisée pour chaque couple sommet S-réseau R vérifiant la condition de l'étape 111. Lorsque la condition de l'étape 111 n'est plus vérifiée, le procédé retourne à l'étape 109.

A l'étape 109, le module 5 teste la condition de sommet d'intersection S à sélectionner. Ici, la condition est vérifiée par les sommets S₂ à S₅, puisque les sommets S₂ à S₅ ont été respectivement mémorisées comme sommets nouvellement marqués lors des passages successifs dans la boucle 20 .

A l'étape 110, un sommet d'intersection S vérifiant la condition de l'étape 109 et présentant l'heure d'arrivée minimale est sélectionné, par exemple le sommet S₂.

Le procédé continue de manière similaire.

Lorsque la condition de l'étape 109 n'est plus vérifiée, le procédé passe à l'étape 119.

A l'étape 119, le module 5 compose l'itinéraire global par chaînage arrière. En d'autres termes, le module 5 récupère les données D_{SB} associées au sommet d'arrivée S_{B}. Les données D_{SB} comprennent l'antécédent du sommet S_{B}, qui est par exemple le sommet S₄. Le module 5 récupère les données de l'antécédent du sommet S_{B}, ici les données D_{S4}. Les données D_{S4} comprennent l'antécédent du sommet S₄, qui est par exemple le sommet S₁. Le module 5 récupère les données de l'antécédent du sommet S₄, ici les données D_{S1}. Les données D_{S1} comprennent l'antécédent du sommet S₁, qui est par exemple le sommet de départ SA. Le module 5 récupère les données de l'antécédent du sommet S₁, ici les données D_{SA}.

A ce moment, le module 5 commande l'affichage de l'itinéraire sur l'écran.

Ce procédé permet de minimiser le temps du voyage entre une station de départ et une station d'arrivée, qui comprend le temps du trajet et le temps d'attente dans les stations, sans avoir à étudier toutes les possibilités, en utilisant la capacité de chaque agent AI à déterminer lui-même une meilleure offre locale.

En outre, ce procédé permet d'éviter la construction d'une base de données contenant l'ensemble des données relatives aux différents réseaux de transport, puisqu'on ne mémorise que les meilleures offres associées respectivement à chaque sommet. Cela évite de télécharger un grand nombre de données, de les mettre au format (chaque opérateur a son propre langage), et résout le problème de mise à jour.

En se référant aux figures 2 et 3, on va maintenant décrire un deuxième exemple d'exécution du procédé de recherche et de composition d'itinéraire, lorsque la requête comprend une contrainte temporelle qui est un horaire t_{F} d'arrivée au plus tard.

A l'étape 100, le module 5 reçoit une requête de recherche et de composition d'itinéraire, la requête comprenant une contrainte temporelle, qui, dans l'exemple, est un horaire t_{F} d'arrivée au plus tard, c'est-à-dire un horaire avant lequel l'utilisateur doit être arrivé au point d'arrivée.

Les étapes 101 et 102 sont similaires à ce qui a été décrit précédemment.

A l'étape 103, le sommet d'arrivée S_{B} est sélectionné comme sommet initial pour effectuer la recherche d'itinéraire.

Les étapes 104 et 105 sont similaires à ce qui a été décrit précédemment.

A l'étape 106, la requête émise comprend un sommet de provenance, par exemple le sommet S₄, un sommet de destination, ici le sommet S_{B}, et un horaire d'arrivée au plus tard, ici l'horaire t_{F}.

A l'étape 107, le module 5 reçoit une réponse de l'agent AI₅ lui indiquant la meilleure offre locale, c'est-à-dire l'offre permettant à l'utilisateur de partir le plus tard du sommet de provenance, ici le sommet S₄, par le biais du réseau sélectionné, ici le réseau R₅, compte tenu de l'horaire d'arrivée, ici l'horaire t_{F}.

A l'étape 108, le module 5 mémorise l'offre locale reçue à l'étape 107 comme meilleure offre locale associée au sommet sélectionné à l'étape 105, ici le sommet S₄. En d'autres termes, le module 5 mémorise un ensemble de données D_{S4}, associées au sommet S₄, comprenant l'horaire t_{4,SB} de départ du sommet S₄, le sommet de destination, ici le sommet S_{B}, et le réseau de transport utilisé, ici le réseau R₅. Le module 5 mémorise également le sommet de destination, ici le sommet S_{B}, comme successeur du sommet sélectionné à l'étape 105, ici le sommet S₄. Le procédé retourne à l'étape 104. Le module 5 mémorise le sommet sélectionné, ici le sommet S₄, comme sommet nouvellement marqué.

La suite du procédé est similaire à ce qui a été décrit précédemment.

A l'étape 113, la requête émise comprend un sommet de provenance, un sommet de destination, et un horaire d'arrivée au plus tard.

A l'étape 114, la réponse reçue de l'agent AI est l'offre permettant à l'utilisateur de partir le plus tard du sommet de provenance, par le biais du réseau de transport sélectionné, compte tenu de l'horaire d'arrivée au plus tard.

A l'étape 116, la condition d'horaire plus avantageux est vérifiée lorsque l'horaire de départ mémorisé est inférieur à l'horaire de départ reçu.

A l'étape 119, le module 5 compose l'itinéraire global par chaînage avant. En d'autre termes, le module 5 récupère les données D_{SA} associées au sommet de départ S_{A}. Les données D_{SA} comprennent le successeur du sommet SA, qui est par exemple le sommet S₁. Le module 5 récupère les données du successeur du sommet S_{A}, ici les données D_{S1}. Les données D_{S1} comprennent le successeur du sommet S₁, qui est par exemple le sommet S₄. Le module 5 récupère les données du successeur du sommet S₁, ici les données D_{S4}. Les données D_{S4} comprennent le successeur du sommet S₄, qui est par exemple le sommet d'arrivée S_{B}. Le module 5 récupère les données du successeur du sommet S₄, ici les données D_{SB}.

A ce moment, le module 5 commande l'affichage de l'itinéraire sur l'écran.

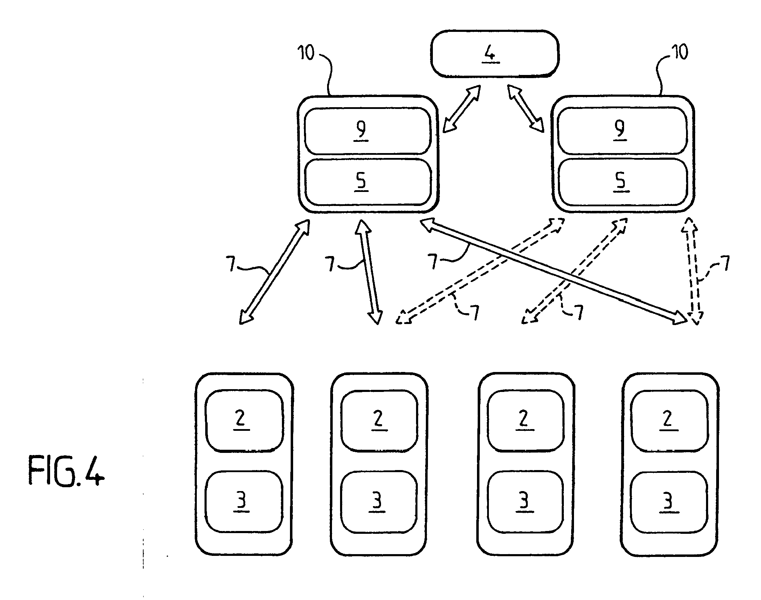

La figure 4 montre une variante de réalisation du dispositif de recherche et de composition d'itinéraire. Dans cette variante, le module 5 est implémenté dans un dispositif utilisateur 10, tel qu'un ordinateur personnel ou un dispositif mobile (PDA, téléphone portable). Deux dispositifs 10 sont représentés sur la figure 4, chaque dispositif 10 appartenant à un utilisateur. Le module 5 peut comporter en outre une base de données pour mémoriser des données relatives aux agents d'information AI intéressant l'utilisateur, ce qui évite au module 5 d'avoir à consulter l'annuaire 4 pour effectuer une recherche.

D'autres variantes sont possibles. Par exemple, le module 5 peut être associé à un système d'information d'aide au déplacement d'un réseau de transport, pour permettre aux utilisateurs de ce système d'information d'accéder aux offres des systèmes d'information des réseaux de transport adjacents.

Le module 5 peut également être sur un serveur hébergé dans un endroit quelconque, chez un fournisseur de service ou autre, mais qui est accessible sur un autre ordinateur à distance, c'est-à-dire que l'interface 9 reste accessible à distance. L'ordinateur peut alors être celui d'un utilisateur, ou un ordinateur installé dans une gare ou station.

L'annuaire 4 peut comporter des informations relatives à un agent d'information AI associé à un réseau de transport routier, les parkings proches des stations des réseaux de transport publics étant dans ce cas considérées comme des stations d'intersection.

Le procédé peut permettre la mémorisation d'un nombre k prédéterminé de meilleures offres associées à chaque sommet pour fournir plusieurs itinéraires à l'utilisateur.

Le procédé de recherche et de composition peut tenir compte d'un temps de transit dans les gares ou les stations. Ce temps permet à un usager de se déplacer d'un quai vers un autre, pour changer de mode dans une station correspondant à un sommet d'intersection. Dans ce cas, les requêtes émises aux étapes 106 et 113 contiennent un sommet de provenance, un sommet de destination, et un horaire de départ au plus tôt t + Δt, qui correspond à l'heure d'arrivée effective au quai de départ en tenant compte du temps de transit Δt. De manière similaire, lorsque la contrainte temporelle est une heure d'arrivée au plus tard, la requête contient un horaire t-Δt. Le temps de transit Δt est paramétré, avant le lancement du procédé, soit par l'utilisateur, soit par le système.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de recherche et de composition d'itinéraire, **caractérisé en ce qu'**il comporte les étapes consistant à :
a) recevoir (100) d'un utilisateur une requête de recherche et de composition d'itinéraire comportant un point de départ, un point d'arrivée et une contrainte temporelle,
b) déterminer un ensemble de réseaux de transport (R₁, R₂, R₃, R₄, R₅) aptes à être utilisés par l'utilisateur pour aller dudit point de départ audit point d'arrivée,
c) construire un graphe virtuel partiel comprenant un ensemble de sommets (SA, S₁, S₂, S₃, S₄, S₅, S_{B}), associés, respectivement, audit point de départ, audit point d'arrivée et à chaque station d'intersection entre au moins deux desdits réseaux de transport déterminés à l'étape b),
d) pour chaque sommet d'un sous-ensemble dudit ensemble de sommets, interroger (106, 113) au moins un agent d'information (AI₁, AI₂, AI₃, AI₄, AI₅) associé à un réseau de transport auquel appartient ledit sommet pour déterminer et mémoriser (108, 117, 118) une meilleure offre locale (D_{S1}, D_{S2}, D_{S3}, D_{S4}, D_{S5}) pour un trajet local reliant ledit sommet et un autre sommet appartenant audit réseau de transport,
e) composer (119) un itinéraire à partir desdites meilleures offres locales déterminées à l'étape d).

2. Procédé selon la revendication 1, **caractérisé en ce que** l'étape d) comprend les sous-étapes consistant à :
f) sélectionner (103, 110) un sommet (SA, S₁, S₂, S₃, S₄, S₅, S_{B}),
g) pour chaque couple sommet-réseau comprenant un réseau de transport (R₁, R₂, R₃, R₄, R₅) auquel ledit sommet sélectionné à l'étape f) appartient et un autre sommet appartenant audit réseau de transport, interroger un agent d'information (AI₁, AI₂, AI₃, AI₄, AI₅) associé audit réseau de transport pour déterminer une meilleure offre locale.

3. Procédé selon la revendication 1 ou 2, **caractérisé en ce que** l'étape d) comprend les sous-étapes consistant à, lorsqu'une meilleure offre locale a été déterminée pour un sommet, tester (115) une condition d'existence de meilleure offre locale déjà mémorisée (D_{S1}, D_{S2}, D_{S3}, D_{S4}, D_{S5}) pour ledit sommet, et, lorsque la condition est vérifiée, comparer (116) la meilleure offre locale déterminée et la meilleure offre locale mémorisée, et conserver celle qui répond le mieux à ladite contrainte temporelle.

4. Procédé selon l'une quelconque des revendications 1 à 3, **caractérisé en ce que** ladite contrainte temporelle est un horaire (t₀) de départ au plus tôt, une meilleure offre locale associée à un sommet minimisant l'heure d'arrivée audit sommet.

5. Procédé selon l'une quelconque des revendications 1 à 3, **caractérisé en ce que** ladite contrainte temporelle est un horaire (t_{F}) d'arrivée au plus tard, une meilleure offre locale associée à un sommet maximisant l'horaire de départ dudit sommet.

6. Module (5) programmé pour mettre en oeuvre les étapes du procédé selon l'une quelconque des revendications 1 à 5.

7. Module selon la revendication 6, **caractérisé en ce qu'**il est apte à communiquer avec des moyens de stockage de données (4) dans lesquels sont mémorisés une liste de réseaux de transport (R₁, R₂, R₃, R₄, R₅), un ensemble de stations d'intersection (S₁, S₂, S₃, S₄, S₅) et des adresses réseau d'agents d'information (AI₁, AI₂, AI₃, AI₄, AI₅) associés auxdits réseaux de transport.

8. Module selon la revendication 6 ou 7, **caractérisé en ce qu'**il est intégré dans un serveur (6) disposé dans un lieu accessible au public, par exemple une gare, un arrêt de bus ou un aéroport.

9. Module selon la revendication 6 ou 7, **caractérisé en ce qu'**il est intégré dans un dispositif utilisateur (10).

10. Programme d'ordinateur comportant des codes d'instructions aptes à être lus ou écrits sur un support et aptes à être exécutés par une machine numérique pour mettre en oeuvre les étapes du procédé selon l'une des revendications 1 à 5.

11. Support d'enregistrement destiné à la mise en oeuvre du procédé tel que revendiqué dans l'une quelconque des revendications 1 à5.

## Revendications modifiées

### Revendications modifiées conformément à la règle 137(2) CBE.

**1.** Procédé de recherche et de composition d'itinéraire,
**caractérisé en ce qu'**il comporte les étapes consistant à :
a) recevoir (100) d'un utilisateur une requête de recherche et de composition d'itinéraire comportant un point de départ, un point d'arrivée et une contrainte temporelle,
b) déterminer un ensemble de réseaux de transport (R₁, R₂, R₃, R₄, R₅) aptes à être utilisés par l'utilisateur pour aller dudit point de départ audit point d'arrivée,
c) construire un graphe virtuel partiel comprenant un ensemble de sommets (S_{A}, S₁, S₂, S₃, S₄, S₅, S_{B}), associés, respectivement, audit point de départ, audit point d'arrivée et à chaque station d'intersection entre au moins deux desdits réseaux de transport déterminés à l'étape b),
d) pour chaque sommet d'un sous-ensemble dudit ensemble de sommets, interroger (106, 113) au moins un agent d'information (AI₁, AI₂, AI₃, AI₄, AI₅) associé à un réseau de transport auquel appartient ledit sommet pour déterminent mémoriser une meilleure offre locale (D_{S1}, D_{S2}, D_{S3}, D_{S4}, D_{S5}) pour un trajet local reliant ledit sommet et un autre sommet appartenant audit réseau de transport, puis tester (115) une condition d'existence de meilleure offre locale déjà mémorisée (D_{S1}, D_{S2}, D_{S3}, D_{S4}, D_{S5}) pour ledit sommet, et, lorsque la condition est vérifiée, comparer (116) la meilleure offre locale déterminée et la meilleure offre locale mémorisée, et conserver celle qui répond le mieux à ladite contrainte temporelle et, lorsque la condition n'est pas vérifiée, mémoriser ladite meilleure offre locale,
e) composer (119) un itinéraire à partir desdites meilleures offres locales déterminées à l'étape d).

**2.** Procédé selon la revendication 1, **caractérisé en ce que** l'étape d) comprend les sous-étapes consistant à :
f) sélectionner (103, 110) un sommet (S_{A}, S₁, S₂, S₃, S₄, S₅, S_{B}),
g) pour chaque couple sommet-réseau comprenant un réseau de transport (R₁, R₂, R₃, R₄, R₅) auquel ledit sommet sélectionné à l'étape f) appartient et un autre sommet appartenant audit réseau de transport, interroger un agent d'information (AI₁, AI₂, AI₃, AI₄, AI₅) associé audit réseau de transport pour déterminer une meilleure offre locale.

**3.** Procédé selon l'une quelconque des revendications 1 à 2, **caractérisé en ce que** ladite contrainte temporelle est un horaire (t₀) de départ au plus tôt, une meilleure offre locale associée à un sommet minimisant l'heure d'arrivée audit sommet.

**4.** Procédé selon l'une quelconque des revendications 1 à 2, **caractérisé en ce que** ladite contrainte temporelle est un horaire (t_{F}) d'arrivée au plus tard, une meilleure offre locale associée à un sommet maximisant l'horaire de départ dudit sommet.

**5.** Module (5) programmé pour mettre en oeuvre les étapes du procédé selon l'une quelconque des revendications 1 à 4.

**6.** Module selon la revendication 5, **caractérisé en ce qu'**il est apte à communiquer avec des moyens de stockage de données (4) dans lesquels sont mémorisés une liste de réseaux de transport (R₁, R₂, R₃, R₄, R₅), un ensemble de stations d'intersection (S₁, S₂, S₃, S₄, S₅) et des adresses réseau d'agents d'information (AI₁, AI₂, AI₃, AI₄, AI₅) associés auxdits réseaux de transport.

**7.** Module selon la revendication 5 ou 6, **caractérisé en ce qu'**il est intégré dans un serveur (6) disposé dans un lieu accessible au public, par exemple une gare, un arrêt de bus ou un aéroport.

**8.** Module selon la revendication 5 ou 6, **caractérisé en ce qu'**il est intégré dans un dispositif utilisateur (10).

**9.** Programme d'ordinateur comportant des codes d'instructions aptes à être lus ou écrits sur un support et aptes à être exécutés par une machine numérique pour mettre en oeuvre les étapes du procédé selon l'une des revendications 1 à 4.

**10.** Support d'enregistrement destiné à la mise en oeuvre du procédé tel que revendiqué dans l'une quelconque des revendications 1 à 4.
